# Europäisches Patentamt
## European Patent Office
### Office européen des brevets

(19)

(11) Veröffentlichungsnummer: **0 256 592**
**A2**

(12) **EUROPÄISCHE PATENTANMELDUNG**

(21) Anmeldenummer: **87201483.2**

(22) Anmeldetag: **04.08.87**

(51) Int. Cl.⁴: **G02B 27/64**

(30) Priorität: **09.08.86 DE 3627076**

(43) Veröffentlichungstag der Anmeldung:
**24.02.88 Patentblatt  88/08**

(84) Benannte Vertragsstaaten:
**DE FR GB IT NL SE**

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **FR GB IT NL SE**

(72) Erfinder: **Falk, Detlef**
**Inselstrasse 52**
**D-2800 Bremen(DE)**
Erfinder: **Christiansen, Heinrich**
**Nachtigallenweg 3**
**D-2807 Achim(DE)**

(74) Vertreter: **Poddig, Dieter, Dipl.-Ing. et al**
**Philips Patentverwaltung GmbH**
**Wendenstrasse 35 Postfach 10 51 49**
**D-2000 Hamburg 1(DE)**

(54) **Vorrichtung zum Einstellen eines Sichtgerätes.**

(57) Bei einem Sichtgerät mit einem bewegbaren Kopf wird ein wählbarer Bildausschnitt der Umgebung aufgenommen und auf einer feststehenden Wiedergabeanordnung dargestellt. Der Kopf wird dabei mittels Motoren bewegt. Durch die Trägheit der großen Massen im Kopf ist eine schnelle Nachführung mit vertretbarem Antriebsaufwand nicht möglich. Erfindungsgemäß ist deswegen eine trägheitsarme, in einem kleinen Winkelbereich wirksame Zusatz-Einstellung überlagert. Diese wird vorzugsweise von denselben Steuersignalen wie die Motoren des Kopfes angesteuert, so daß bei einer Lageänderung des Kopfes zunächst die überlagerte Zusatz-Einstellung reagiert, während der Kopf langsam nachfolgt. Dadurch ist eine schnelle Einstellung der Blickrichtung des Sichtgerätes mit geringem Aufwand möglich. Die Zusatz-Einstellung kann auch zur Justierung der Visierlinie mitverwendet werden.

Fig. 2

## "Vorrichtung zum Einstellen eines Sichtgerätes"

Die Erfindung betrifft eine Vorrichtung zum Einstellen eines Sichtgerätes, insbesondere in Fahrzeugen, mit einem Kopf, der mittels Motoren durch Steuersignale um eine waagerechte und/oder senkrechte Achse auf einen wählbaren Ausschnitt der Umgebung einstellbar ist, und einer Wiedergabeanordnung zur Darstellung dieses Ausschnitts.

Ein derartiges Sichtgerät, das z.B. ein kombiniertes Tag-und Nachtsichtgerät umfassen kann, kann in einem Fahrzeug angeordnet sein, das außerdem mindestens eine richtbare Waffe und einen Feuerleitrechner, häufig auch ein Zielfolgeradar enthält. Ferner ist ein Kreisel im Fahrzeug vorhanden, dessen Lagedaten ebenfalls dem Feuerleitrechner zugeführt werden.

Der Kopf des Sichtgeräts erfaßt nur einen Ausschnitt der gesamten Umgebung, und daher ist der Kopf allgemein um zwei Achsen schwenkbar, und zwar im Höhenwinkel (Elevation) um -20° +70° und (Azimut) rundum n.360°, d.h. ohne Anschlag. Das Verschwenken bzw. Einstellen auf einen bestimmten Ausschnitt der Umgebung erfolgt durch Motoren, die vom Feuerleitrechner gemäß einer Soll-Ist-Lagedifferenz gesteuert werden. Die Soll-Lage kann z.B. durch das Zielfolgeradar vorgegeben werden, aber auch die Einstellung des Sichtgeräts über Joystick ist möglich. Zusätzlich werden bei der Soll-Lage auch die Kreiseldaten berücksichtigt.

Wenn sich das Fahrzeug in Fahrt befindet, bewegen sich die darauf angebrachten Geräte mit. Bei relativ langsamen Bewegungen, wie Fahrtrichtungsänderungen, können die Geräte der Sollrichtung weitgehend unmittelbar nachgeführt werden. Durch Fahrbahnunebenheiten werden jedoch - schnelle Bewegungen mit kleiner Amplitude erzeugt, die so große Beschleunigungswerte erreichen, wobei die maximalen Beschleunigungen etwa umgekehrt proportional den Amplituden sind, daß die Geräte mit vernünftigem Antriebsaufwand diesen schnellen Bewegungen nicht folgen können.

Dies gilt grundsätzlich auch für das Sichtgerät. Dadurch sieht der Beobachter ein, wenn auch mit kleiner Amplitude, schnell bewegtes Bild, so daß er während der Fahrt, besonders bei stärkerer Vergrößerung, keine Einzelheiten erkennen kann. Ferner ist bei Einstellung des Sichtgerätes auf eine neue Lage eine Erkennung von Einzelheiten praktisch erst möglich, wenn diese neue Lage vom Kopf des Sichtgeräts vollständig erreicht ist.

Aufgabe der Erfindung ist es, ein Sichtgerät der eingangs genannten Art derart auszubilden, daß der Ausschnitt der Umgebung, der auf der Wiedergabeanordnung als sichtbares Bild dargestellt werden soll, bei einer Änderung der Soll-Lage des Kopfes möglichst schnell erscheint bzw. bei schnellen kleinen Relativbewegungen des Sichtgerätes gegenüber der Umgebung ruhig erscheint.

Diese Aufgabe wird erfindungsgemäß dadurch gelöst, daß der Einstellung durch Bewegung des Kopfes eine trägheitsarme, in einem kleinen Winkelbereich wirksame Zusatz-Einstellung überlagert ist, die parallel zu den Motoren von den Steuersignalen einstellbar ist.

Infolge der Überlagerung der Kopfeinstellung durch eine trägheitsarme Zusatz-Einstellung braucht also nicht der ganze Kopf genau auf den gewünschten Ausschnitt der Umgebung eingestellt zu werden, sondern bereits bei einer ungefähren Einstellung erscheint der gewünschte Ausschnitt der Umgebung auf der Wiedergabeanordnung, während der Kopf noch infolge seiner Trägheit langsam in die Endlage läuft. Andererseits braucht bei schnellen kleinen Bewegungen des Sichtgerätes gegenüber der Umgebung der Kopf praktisch nicht nachgesteuert zu werden, da diese - schnellen Bewegungen durch die Zusatz-Einstellung ausgeglichen werden. Dadurch ist auch bei - schneller Fahrt eines Fahrzeuges, in dem das erfindungsgemäße Sichtgerät angeordnet ist, eine ruhige Beobachtung eines bestimmten Ausschnitts der Umgebung möglich.

Häufig ist mit dem Kopf zusätzlich eine Waffe mehr oder weniger starr gekoppelt, so daß die Achse dieser Waffe stets auf einen bestimmten Punkt im Bildfeld des wiedergegebenen Bildes zeigt. Um diesen Punkt, auf den die Achse der Waffe zeigt, mit einem vorgegebenen Punkt bzw. einer Zielmarke in dem wiedergegebenen Bild in Übereinstimmung zu bringen, ist allgemein eine aufwendige mechanische Justierung erforderlich. Bei dem erfindungsgemäßen Sichtgerät ist es jedoch vorteilhaft, daß die Justierung einer Visierlinieentsprechend der Übereinstimmung eines bestimmten Punktes im ausgewählten Ausschnitt mit einem bestimmten Punkt in der Darstellung dieses Ausschnitts über die Zusatz-Einstellung durch deren Einstellung mittels von Korrektursignalen überlagerten Steuersignalen erfolgt. Auf diese Weise kann die Justierung sehr einfach mit elektrischen Signalen erfolgen.

Die Zusatz-Einstellung kann auf verschiedene Weise realisiert werden. Bei einem Sichtgerät zur Aufnahme sichtbarer Strahlung (Tagsichtgerät) und zur Weiterleitung über einen optischen Kanal direkt zur feststehenden Wiedergabeanordnung ist es vorteilhaft, daß die Zusatz-Richtungssteuerung eine im optischen Kanal angeordnete lichtablenkende Anordnung umfaßt, die mittels Zusatzmotoren einstellbar ist, die durch die Steuersignale steuerbar sind und bei einem definierten Steuersignal die Anordnung in eine vorbestimmte Lage zum Kopf bringen. Dabei ist zweckmäßig die lichtablenkende Anordnung ein Spiegel, der dem optischen Kanal vorgesetzt ist. Auf diese Weise ist kein Eingriff in den optischen Kanal erforderlich, und ein derartiger Spiegel kann trägheitsarm ausgebildet werden, so daß er mit geringen Motorkräften schnell eingestellt werden kann.

Bei einem Sichtgerät zur Aufnahme von Infrarotstrahlung (Wärmebildgerät), die über einen Schwingspiegel auf eine Detektoranordnung gelenkt wird, deren Detektorausgangssignal eine Kathodenstrahlröhre ansteuert, deren Ablenksignale synchron mit der Bewegung des Schwingspiegels sind, ist es zweckmäßig, daß die Steuersignale in je einer Addierstufe vorzeichenrichtig zu den Ablenksignalen addiert werden und die Summensignale die Kathodenstrahlröhre ansteuern. Dadurch wird also das auf der Kathodenstrahlröhre wiedergegebene Bild relativ zur Kathodenstrahröhre verschoben, so daß auf diese Weise eine elektrische Zusatz-Richtungssteuerung verwirklicht wird, die praktisch trägheitslos ist.

Ausführungsbeispiele der Erfindung werden nachstehend anhand der Zeichnung näher erläutert. Es zeigen:

Fig. 1 schematisch den grundsätzlichen mechanischen Aufbau des erfindungsgemäßen Sichtgeräts,

Fig. 2 die überlagerte Grob-und Feinsteuerung durch dieselben Steuersignale,

Fig. 3 ein Detail der Steuerung eines Spiegels für ein Tagsichtgerät,

Fig. 4 die Erzeugung der Signale für eine richtige Darstellung der Zielmarke für ein Wärmebildgerät.

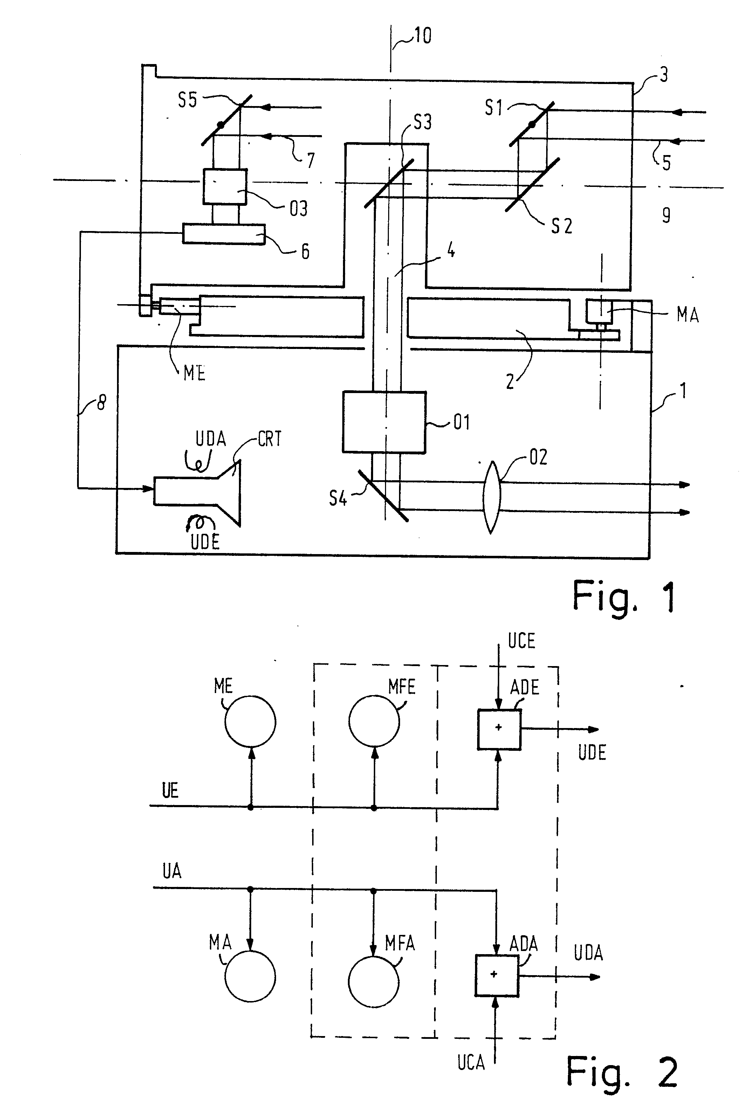

In Fig. 1 ist der Aufbau des Sichtgeräts - schematisch dargestellt. Mit dem fest mit dem Fahrzeug verbundenen Teil 1, das die Einblicköffnungen enthält, ist ein Teil 2 um die senkrechte Achse drehbar verbunden. Mit diesem Teil 2 ist wiederum ein Teil 3 um die waagerechte Achse drehbar verbunden. Teil 2 und Teil 3 stellen den Kopf des Sichtgeräts dar. Die Einstellung um die senkrechte Achse (Azimut) erfolgt mit Hilfe des Motors MA, und die Einstellung um die waagerechte Achse (Elevation) erfolgt mit Hilfe des Motors ME.

Die einfallende Strahlung 5 im sichtbaren Bereich geht über einen optischen Kanal 4 von dem Spiegel S1 zum Spiegel S2 und von dort in der waagerechten Drehachse zum Spiegel S3, der den optischen Kanl 4 in die senkrechte Achse ablenkt. Über eine Revisieroptik 01 (andere optische Glieder sind der Übersichtlichkeit halber weggelassen), die die Drehung des Kopfes aus den Teilen 2 und 3 um die senkrechte Achse optisch ausgleicht, geht der optische Kanal über den Spiegel S4 zur Einblickoptik 02.

Die Wärmestrahlung trifft auf den Schwingspiegel S5 und wird über eine Infrarotoptik 03 auf eine Detektoranordnung 6 abgebildet. Letztere besteht üblicherweise aus einer Detektorzeile, deren parallelen Einzelsignale periodisch in ein serielles Signal umgewandelt und der Kathodenstrahlröhre CRT zugeführt werden. Die Ablenkung des Elektronenstrahls in CRT erfolgt synchron mit der Auslenkung des Schwingspiegels S5.

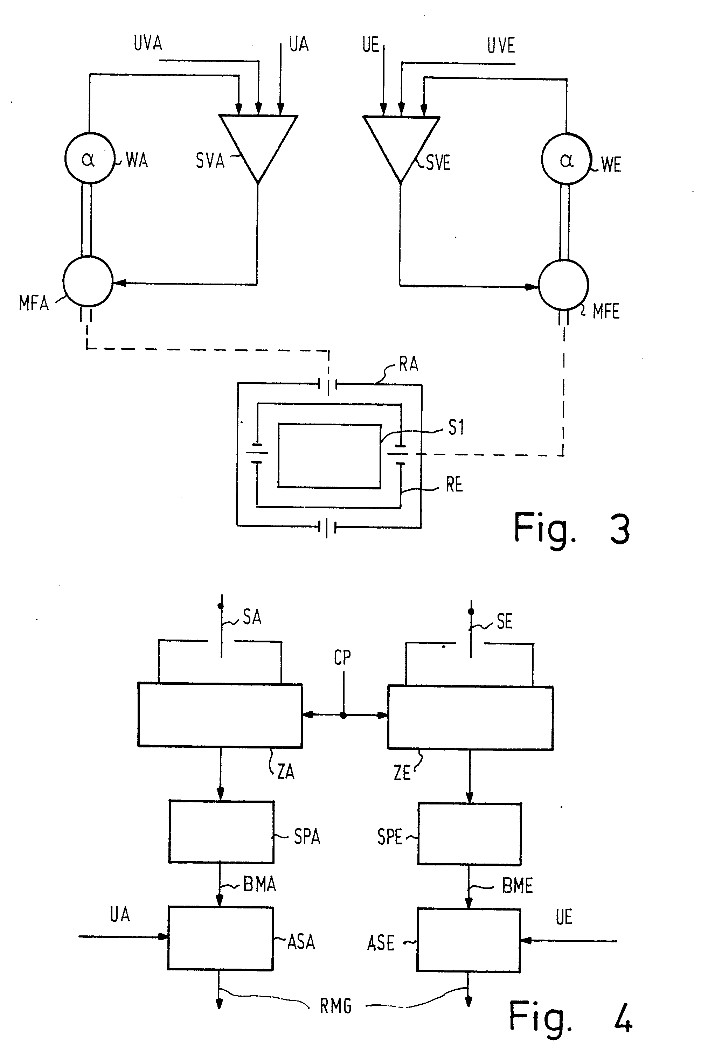

Die Motoren ME und MA, die den Kopf aus den Teilen 2 und 3 in Elevation und Azimut richtig einstellen, werden durch Steuersignale UE und UA gesteuert, wie in Fig. 2 dargestellt ist. Diese Steuersignale UE und UA, die die Winkeldifferenz zwischen dem Sollwert und dem Istwert der Lage des Kopfes angeben und tatsächlich der Lageregelung der Motoren ME und MA als Sollgröße dienen, werden von einem Feuerleitrechner erzeugt, der nicht näher dargestellt ist. Dieser erhält beispielsweise Steuersignale von einem Zielfolgeradar oder von einem handbedienten Steuerknüppel, zusammen mit Steuersignalen von einem im Sichtgerät bzw. im zugehörigen Fahrzeug angeordneten Kreisel, so daß schnelle Bewegungen des Fahrzeuges unmittelbar entsprechende Steuersignale des Feuerleitrechners zum Einstellen des Kopfes erzeugen.

Die Antriebsmotoren ME und MA für die Elevations-und die Azimutbewegung erreichen nur begrenzte Richtbeschleunigungen und Richtgeschwindigkeiten. Um die Richtzeit für den Beobachter zu reduzieren, wird im Einstellwinkelbereich von z.B. +1° vom Sollwert das Bild feingesteuert.

Dafür befindet sich wegen der großen Massenträgheitsmomente der bei Azimut-und Elevationsdrehung zu bewegenden Massen und wegen der Dichtungsreibungen am Eingang des Tagsichtstrahlenganges 5 ein kleiner Spiegel S1, der um zwei Achsen in einem kleinen Winkelbereich von ca. 1° drehbar ist. Dieser Spiegel folgt während der Einstellung wegen seines kleinen Massenträgheitsmomentes den Steuersignalen UE und UA des Feuerleitrechners wesentlich schneller.

Der Antrieb des Spiegels S1 erfolgt durch zwei Stellmotore MFE und MFA jeweils in Azimut und Elevation, die gemäß Fig. 2 ebenfalls von den Steuersignalen UE und UA vom Feuerleitrechner gesteuert werden. Diese Steuersignale werden außer den Motoren MFE und MFA für die Feinsteuerung des Spiegels S1 auch Addierern ADE und ADA für die Ablenkspannungen der Kathodenstrahlröhre zugeführt.

In Fig. 3 ist diese Feinsteuerung etwas genauer dargestellt. In dem Regelkreis der Antriebsmotore MFE und MFA für Azimut und Elevation des Spiegels S1 findet ein Sollwert-Istwert-Vergleich zwischen den Steuersignalen UE und UA des Feuerleitrechners und den Winkelgebern WE und WA der Feinsteuerung statt, und zwar in den Summierverstärkern SVE und SVA, die die Motoren MFE und MFA ansteuern. Der normalerweise dabei vorhandene überlagerte Geschwindigkeitsregelkreis ist der Übersichtlichkeit halber weggelassen.

Für die Justierung der Visierlinie werden Korrektursignale UVA und UVE, die beispielsweise durch Potentiometer erzeugt werden, in den Summierverstärkern SVA und SVE mitaddiert. Dadurch wird also bei stillstehendem Kopf, d.h. bei unbewegten Teilen 2 und 3 in Fig. 1, durch Änderung dieser Korrektursignale UVA und UVE das wiedergegebene Bild etwas verschoben, so daß es möglich ist, einen bestimmten Punkt im Ausschnitt der Umgebung, auf den beispielsweise die Achse der mit dem Sichtgerät gekoppelten Waffe gerichtet ist, auf einen bestimmten Punkt des Wiedergabebildfeldes auszurichten. Dieser Punkt des Wiedergabebildfeldes kann beispielsweise durch eine in den optischen Strahlengang 4, 5 eingespiegelte Richtmarke gebildet sein. Der Spiegel S1 ist über zwei Rahmen RE und RA kardanisch bewegbar, wobei der eine Rahmen RE durch den Motor MFE und der andere Rahmen RA durch den Motor MFA bewegt wird. Dadurch kann der Spiegel S1 im Rahmen seines Einstellwinkelbereichs so bewegt werden, daß innerhalb dieses Rahmens jede Verschiebung des wiedergegebenen Bildes in Azimut und Elevation leicht möglich ist.

Die Feinsteuerung mit einem Spiegel ist nur für den Tagbetrieb möglich. Um die Richtzeit für den Beobachter auch im Nachtbetrieb (Wärmebild) zu reduzieren, wird die Feinregelung durch eine Bildverschiebung bei der Wiedergabe auf einer Kathodenstrahlröhre CRT in Azimut und Elevation realisiert. Dafür werden die Steuersignale UE und UA des Feuerleitrechners für die Bildverschiebung den horizontalen und vertikalen Ablenksignalen UCE und UCA der Kathodenstrahlröhre lagerichtig zuaddiert. Dies ist in Fig. 2 dargestellt, wo jedes Steuersignal UE und UA auf einen eigenen Addierer ADA und ADE führt und dort zu der entsprechenden, von einem nicht dargestellten Signalgenerator erzeugten Ablenkspannung UCE und UCA zu Ablenksignalen UDE und UDA für die Kathodenstrahlröhre CRT addiert wird. Die Steuersignale werden vorher noch über nicht dargestellte Begrenzerstufen zur Einengung des Korrekturbereiches begrenzt.

Der Beobachter sieht Wärmebild feststehend. Da die Stellzeit praktisch Null ist, treten keine Bildunschärfen durch die Nachleuchtdauer der Kathodenstrahlröhre CRT auf.

In dem Wärmebild wird ebenfalls eine Richtmarke dargestellt, die die Achse der mit dem Sichtgerät gekoppelten Waffe darstellt. Diese Richtmarke wird durch einen nicht dargestellten Richtmarkengenerator erzeugt, der von den Ablenksignalen UCE und UCA gesteuert wird. Wenn nun das wiedergegebene Wärmebild auf der Kathodenstrahlröhre CRT zur Feinsteuerung verschoben wird, bzw. die Kopfrichtung und damit die Richtung der Waffenachse sich gegenüber dem dargestellten Bild ändert, muß auch die Richtmarke entsprechend verschoben werden. Dies geschieht durch die in Fig. 4 dargestellte Anordnung, die gleichzeitig auch die Justierung der Richtmarke für das Wärmebild umfaßt.

Die Justieranordnung enthält zwei Zähler ZA und ZE, die am Zähleingang ein Taktsignal CP erhalten. Abhängig von der Stellung des Schalters SA bzw. SE zählen diese Zähler aufwärts, abwärts oder bleiben in Ruhe. Die Zählerstellung wird in einen Speicher SPA bzw. SPE übernommen, die die Korrektursignale BMA und BME abgeben, die ohne Feinregelung des Wärmebildes dem nicht dargestellten Richtmarkengenerator zugeführt werden, der dadurch die auf dem Wärmebild erzeugte Richtmarke gegenüber den Ablenksignalen entsprechend verschiebt. Durch die Feinsteuerung des Wärmebildes durch Verschiebung auf der Kathodenstrahlröhre ist außerdem aber noch eine gegenläufige Verschiebung der Richtmarke erforderlich. Dafür werden die Korrektursignale BMA und BME einer zugeordneten Addierstufe ASA bzw. ASE zugeführt, die außerdem die vom Feuerleitrechner erzeugten Steuersignale UA und UE erhalten. Die dabei erzeugten Summensignale RMG werden dem Richtmarkengenerator zugeführt, der dadurch die Richtmarke nicht nur abhängig von der Justierung, sondern auch abhängig von der Feinsteuerung des Wärmebildes gegenüber den Ablenksignalen verändert. Auf diese Weise sieht ein Beobachter ein ruhig stehendes Bild, in dem lediglich die Richtmarke korrekt ihre Lage ändert.

**Ansprüche**

1. Vorrichtung zum Einstellen eines Sichtgerätes, insbesondere in Fahrzeugen, mit einem Kopf, der mittels Motoren durch Steuersignale um eine waagerechte und/oder senkrechte Achse auf einen wählbaren Ausschnitt der Umgebung einstellbar ist, und einer Wiedergabeanordnung zur Darstellung dieses Ausschnitts, dadurch gekennzeichnet, daß der Einstellung durch Bewegung des Kopfes (2, 3) eine trägheitsarme, in einem kleinen Winkelbereich wirksame Zusatz-Einstellung (S1, MFE, MFA, ADE, ADA) überlagert ist, die parallel zu den Motoren (ME, MA) von den Steuersignalen (UE, UA) einstellbar ist.

2. Vorrichtung nach Anspruch 1,
dadurch gekennzeichnet, daß die Justierung einer Visierlinie entsprechend der Übereinstimmung eines bestimmten Punktes im ausgewählten Ausschnitt mit einem bestimmten Punkt in der Darstellung dieses Ausschnitts über die Zusatz-Einstellung durch deren Einstellung mittels von Korrektursignalen (UVE, UVA, BME, BMA) überlagerten Steuersignalen (UA, UE) erfolgt.

3. Vorrichtung nach Anspruch 1 oder 2 für ein Sichtgerät zur Aufnahme sichtbarer Strahlung (Tagsichtgerät) und zur Weiterleitung über einen optischen Kanal direkt zur Wiedergabeanordnung,
dadurch gekennzeichnet, daß die Zusatz-Richtungssteuerung (S1, MFE, MFA) eine im optischen Kanal (4, 5) angeordnete lichtablenkende Anordnung (S1) umfaßt, die mittels Zusatzmotoren (MFE, MFA) einstellbar ist, die durch die Steuersignale (UE, UA) steuerbar sind und bei einem definierten Steuersignal die Anordnung (S1) in eine vorbestimmte Lage zum Kopf (2, 3) bringen.

4. Vorrichtung nach Anspruch 3,
dadurch gekennzeichnett, daß die lichtablenkende Anordnung ein Spiegel ist, der dem optischen Kanal vorgesetzt ist.

5. Vorrichtung nach Anspruch 1 oder 2 für ein Sichtgerät zur Aufnahme von Infrarotstrahlung (Wärmebildgerät), die über einen Schwingspiegel auf eine Detektoranordnung gelenkt wird, deren Detektorausgangssignal eine Kathodenstrahlröhre ansteuert, deren Ablenksignale synchron mit der Bewegung des Schwingspiegels sind,
dadurch gekennzeichnet, daß die Steuersignale (UE, UA) in je einer Addierstufe (ADE, ADA) vorzeichenrichtig zu den Ablenksignalen (UCE, UCA) addiert werden und die Summensignale (UDE, UDA) die Kathodenstrahlröhre (CRT) ansteuern.

Fig. 1

Fig. 2

1-II- PHD 86—102

Fig. 3

Fig. 4

2 — Ⅱ — PHD 86—102